# EUROPEAN PATENT SPECIFICATION

(11) **EP 1 669 117 B1**
(45) Date of publication and mention of the grant of the patent: **30.03.2016**
(21) Application number: 05110463.6
(22) Date of filing: 08.11.2005
(51) Int. Cl.: H04L 29/08

(54) **METHOD AND DEVICE FOR STORING AND PROVIDING GAME-RELATED AND USER-RELATED INFORMATION IN A PROFILE FOR A GAMING SERVICE**
VERFAHREN UND VORRICHTUNG ZUM SPEICHERN UND BEREITSTELLEN VON SPIEL- UND USERBASIERENDEN INFORMATIONEN IN EINEM PROFIL FÜR EINEN SPIELDIENST.
PROCEDE ET DISPOSITIF POUR MEMORISER ET PROPOSER UN PROFIL BASE SUR DES INFORMATIONS DE JEU ET DES JOUEURS POUR UN SERVICE DE JEU

(30) Priority: 07.12.2004 US 5674; 07.12.2004 US 6118
(43) Date of publication of application: 14.06.2006
(73) Proprietor: Microsoft Technology Licensing, LLC, Redmond, WA 98052 (US)
(72) Inventor: Johnson, Jerry A., 98052, Redmond (US); Hansen, Johan Peter, 98052, Redmond (US); Chen, Ling Tony, 98052, Redmond (US); Bortnik, Michal, 98052, Redmond (US); O'Kelley, II, Patrick W., 98052, Redmond (US); Henson, Scott, 98052, Redmond (US); Macauley, James David, 98052, Redmond (US); Malabuyo, Paolo V., 98052, Redmond (US); Gunn, Steven Ryan, 98052, Redmond (US)
(74) Representative: Fischer, Michael Maria

(56) References cited:
- EP-A- 1 520 608
- US-A1- 2002 142 842
- US-A1- 2003 216 962

## Description

### COPYRIGHT NOTICE / PERMISSION

A portion of the disclosure of this patent document contains material, which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice applies to the software and data as described below and in the drawings hereto: Copyright © 2004, Microsoft Corporation, All Rights Reserved.

### FIELD OF THE INVENTION

This invention generally relates to the field of gaming and multimedia devices. In particular, the present invention is directed to a system and method of creating and maintaining a unique gaming identity.

### BACKGROUND OF THE INVENTION

Conventional gaming systems include a concept of unique identity, which was intended to increase player satisfaction and create a sense of community. However, while the conventional unique identity does minimize the effort required to play online, the unique identity failed to accomplish these goals. One reason for this problem is that multiple players often share an identity because there is no easy way for multiple players to identify themselves on a shared gaming device. This creates confusion as a player using a particular identity during an online gaming session, may not be the same player in the next session or from the previous session.

Further, conventional identities have failed to provide a method for conveying information about players other than a limited set of game achievements. Thus, it is difficult to learn more about a player through the unique identity. For example, players cannot determine the country or location of other players, cannot record personal greetings or see other players' avatars (display tiles) outside of a specific game, and cannot determine a player's reputation, etc. Therefore, there is a need for a unique identity that is rich, customizable and engaging. The identity should be public and automatically shared with the rest of the community, while protecting a player's privacy. The present invention provides such a solution.

EP 1 520 608 A (post-published) relates to techniques that enable a person to quickly join in playing an online game that is being played over a network. The gaming environment comprises a plurality of game consoles which are connected to a gaming server. Data packets are conveyed between the gaming server and the game consoles through VPN tunnels, over the internet. Each game console is thus connected in secure communication with the gaming server. The gaming server comprises a single server or a plurality of servers that are coupled together to carry out specific functions required for the gaming service. Use of the VPN tunnel ensures a secure communication link between each game console and the gaming service. The secure gaming environment does not provide any option for connecting a game console over the internet to any other device and only permits communication between game consoles that are connected to the gaming service, to enable the game consoles to participate in multiplayer games. A friends list includes Gamertags for other online game players that the user wants to be on the friends list. An option available to the user is to selectively display Scoreboards for the game by selecting an option. Selecting this option causes the online gaming service to send the Scoreboards to the user for display so that the user can see the Gamertags of the players who are currently in the lead in the Kudos accumulated in playing the game (this option is game specific).

US 2002/142842 A1 relates to a console system which is provided by a server to enable functionality for interactive games through digital television, online television, the internet and other forms of output where one or more players may participate in the interactive games. The console system provides a set of predetermined base functionality modules that are leveraged by interactive games provided through various software game modules. Various software game applications communicate with the console at the central server to provide interactive functionality with remote users. The remote users access the central server from a user device which enables the remote user to provide inputs to complete parameters expected by the interactive game. By providing base functionality in a console system, new interactive games as well as modifications to existing games are easier to develop and implement, because changes are made to the software game module. The software game module provides game specific functionality which selects the base functionality needed from the base functionality modules and passes those modules parameter values according to how the operation is desired.

US 2003/216962 A1 relates to enabling each user in an electronic community to provide feedback regarding a behavior of another user in the electronic community, and to automatically enhance or limit the other users participation in the electronic community.

### SUMMARY OF THE INVENTION

It is the object of the present invention to increase the usability of a gaming console.

This object is solved by the subject matter of the independent claims. Preferred embodiments are defined by the dependent claims.

The present invention is direct to methods and devices for aggregating information related to users to create a digital identity or profile of the user. In accordance with an aspect of the invention, there is provided in a gaming service to which gaming devices are remotely connected, a method of creating and maintaining a profile about a user that is available to other users of the gaming service. The method includes receiving self-provided information from the user; receiving the user's game playing achievements; receiving feedback information regarding the user from other users; storing the user's game playing achievements and feedback information in a profile; and making the profile available to the other users in accordance with user's preferences.

According to features of the invention, the service may receive game customization preferences from the user and store the game customization preferences in the profile. The game customization preferences may be applied to gaming applications and controller devices on the gaming devices connected to the gaming service.

The data accumulated to the gaming service may be used to populate a guide that is executed on the gaming devices. The guide provides a graphical interface to navigate the profile information of the user and other users of the service. The guide may provide a friends list or a recent players list.

An offline mode is provided in the gaming devices where the game playing achievements are accumulated when the user is not connected to the gaming service. The achievements are synchronized upon a next connection to the gaming service. The user's gaming reputation is built based upon the feedback information and the game playing achievements. Reward points may be awarded to the user based on the game playing achievements.

Optionally, the user's presence information may be made available to the other users.

In accordance with another aspect of the invention, there is provided a gaming console that includes a processor adapted to run gaming applications on the gaming console, a memory for storing game-related and user-related data, and a network interface. The gaming console aggregates data related to the user's interaction with the gaming applications and forwards the data to a remote service via the network interface.

The digital identity information may include data regarding the user's interaction with the gaming applications, preferences, game achievements and reward points. Feedback information about the user may be provided by other users of the remote service that is added to the digital identity.

Additional features and advantages of the invention will be made apparent from the following detailed description of illustrative embodiments that proceeds with reference to the accompanying drawings.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:
Fig. 1 is a block diagram showing a gaming console in which aspects of the present invention may be implemented;
Fig. 2 illustrates an exemplary architecture in which the present invention may be implemented;
Fig. 3 illustrates sources of information that provide input to a Gamer Profile;
Figs. 4-13 illustrate various graphical user interfaces in accordance with the present invention.

### DETAILED DESCRIPTION OF ILLUSTRATIVE EMBODIMENTS

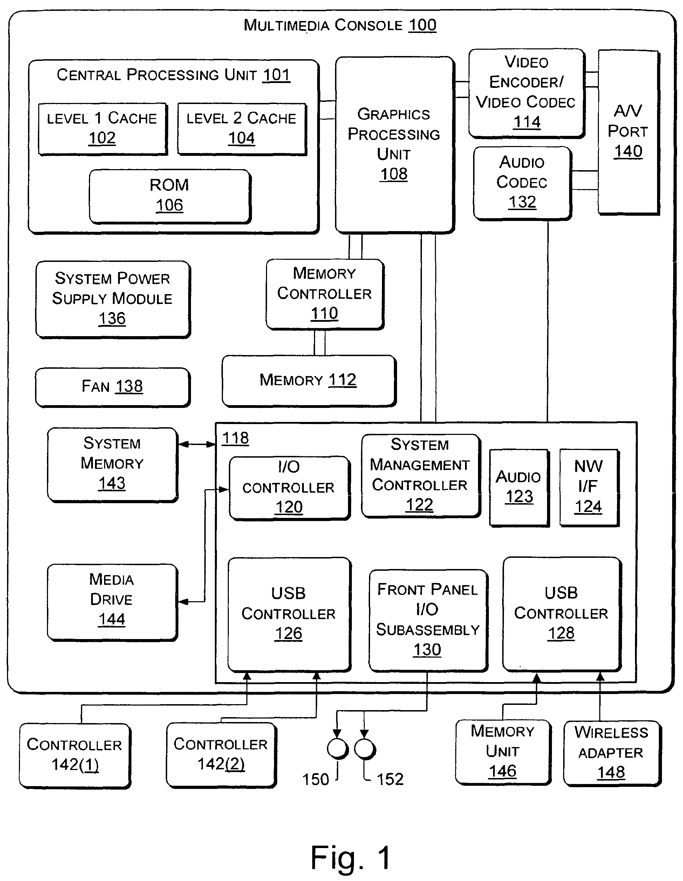

Fig. 1 illustrates the functional components of a multimedia/gaming console 100 in which certain aspects of the present invention may be implemented. The multimedia console 100 has a central processing unit (CPU) 101 having a level 1 cache 102, a level 2 cache 104, and a flash ROM (Read Only Memory) 106. The level 1 cache 102 and a level 2 cache 104 temporarily store data and hence reduce the number of memory access cycles, thereby improving processing speed and throughput. The CPU 101 may be provided having more than one core, and thus, additional level 1 and level 2 caches 102 and 104. The flash ROM 106 may store executable code that is loaded during an initial phase of a boot process when the multimedia console 100 is powered ON.

A graphics processing unit (GPU) 108 and a video encoder/video codec (coder/decoder) 114 form a video processing pipeline for high speed and high resolution graphics processing. Data is carried from the graphics processing unit 108 to the video encoder/video codec 114 via a bus. The video processing pipeline outputs data to an A/V (audio/video) port 140 for transmission to a television or other display. A memory controller 110 is connected to the GPU 108 to facilitate processor access to various types of memory 112, such as, but not limited to, a RAM (Random Access Memory).

The multimedia console 100 includes an I/O controller 120, a system management controller 122, an audio processing unit 123, a network interface controller 124, a first USB host controller 126, a second USB controller 128 and a front panel I/O subassembly 130 that are preferably implemented on a module 118. The USB controllers 126 and 128 serve as hosts for peripheral controllers 142(1)-142(2), a wireless adapter 148, and an external memory device 146 (e.g., flash memory, external CD/DVD ROM drive, removable media, etc.). The network interface 124 and/or wireless adapter 148 provide access to a network (e.g., the Internet, home network, etc.) and may be any of a wide variety of various wired or wireless adapter components including an Ethernet card, a modem, a Bluetooth module, a cable modem, and the like.

System memory 143 is provided to store application data that is loaded during the boot process. A media drive 144 is provided and may comprise a DVD/CD drive, hard drive, or other removable media drive, etc. The media drive 144 may be internal or external to the multimedia console 100. Application data may be accessed via the media drive 144 for execution, playback, etc. by the multimedia console 100. The media drive 144 is connected to the I/O controller 120 via a bus, such as a Serial ATA bus or other high speed connection (e.g., IEEE 1394).

The system management controller 122 provides a variety of service functions related to assuring availability of the multimedia console 100. The audio processing unit 123 and an audio codec 132 form a corresponding audio processing pipeline with high fidelity and stereo processing. Audio data is carried between the audio processing unit 123 and the audio codec 132 via a communication link. The audio processing pipeline outputs data to the A/V port 140 for reproduction by an external audio player or device having audio capabilities.

The front panel I/O subassembly 130 supports the functionality of the power button 150 and the eject button 152, as well as any LEDs (light emitting diodes) or other indicators exposed on the outer surface of the multimedia console 100. A system power supply module 136 provides power to the components of the multimedia console 100. A fan 138 cools the circuitry within the multimedia console 100.

The CPU 101, GPU 108, memory controller 110, and various other components within the multimedia console 100 are interconnected via one or more buses, including serial and parallel buses, a memory bus, a peripheral bus, and a processor or local bus using any of a variety of bus architectures. By way of example, such architectures can include a Peripheral Component Interconnects (PCI) bus, PCI-Express bus, etc.

When the multimedia console 100 is powered ON, application data may be loaded from the system memory 143 into memory 112 and/or caches 102, 104 and executed on the CPU 101. The application may present a graphical user interface that provides a consistent user experience when navigating to different media types available on the multimedia console 100. In operation, applications and/or other media contained within the media drive 144 may be launched or played from the media drive 144 to provide additional functionalities to the multimedia console 100.

The multimedia console 100 may be operated as a standalone system by simply connecting the system to a television or other display. In this standalone mode, the multimedia console 100 allows one or more users to interact with the system, watch movies, or listen to music. However, with the integration of broadband connectivity made available through the network interface 124 or the wireless adapter 148, the multimedia console 100 may further be operated as a participant in a larger network community.

When the multimedia console 100 is powered ON, a set amount of hardware resources are reserved for system use by the multimedia console operating system. These resources may include a reservation of memory (e.g., 16MB), CPU and GPU cycles (e.g., 5%), networking bandwidth (e.g., 8 kbs), etc. Because these resources are reserved at system boot time, the reserved resources do not exist from the application's view.

In particular, the memory reservation preferably is large enough to contain the launch kernel, concurrent system applications and drivers. The CPU reservation is preferably constant such that if the reserved CPU usage is not used by the system applications, an idle thread will consume any unused cycles.

With regard to the GPU reservation, lightweight messages generated by the system applications (e.g., popups) are displayed by using a GPU interrupt to schedule code to render popup into an overlay. The amount of memory required for an overlay depends on the overlay area size and the overlay preferably scales with screen resolution. Where a full user interface is used by the concurrent system application, it is preferable to use a resolution independent of application resolution. A scaler may be used to set this resolution such that the need to change frequency and cause a TV resynch is eliminated.

After the multimedia console 100 boots and system resources are reserved, concurrent system applications execute to provide system functionalities. The system functionalities are encapsulated in a set of system applications that execute within the reserved system resources described above. The operating system kernel identifies threads that are system application threads versus gaming application threads. The system applications are preferably scheduled to run on the CPU 101 at predetermined times and intervals in order to provide a consistent system resource view to the application. The scheduling is to minimize cache disruption for the gaming application running on the console.

When a concurrent system application requires audio, audio processing is scheduled asynchronously to the gaming application due to time sensitivity. A multimedia console application manager (described below) controls the gaming application audio level (e.g., mute, attenuate) when system applications are active.

Input devices (e.g., controllers 142(1) and 142(2)) are shared by gaming applications and system applications. The input devices are not reserved resources, but are to be switched between system applications and the gaming application such that each will have a focus of the device. The application manager preferably controls the switching of input stream, without knowledge the gaming application's knowledge and a driver maintains state information regarding focus switches.

The present invention is directed to a "Gamer Profile," which serves as a building block for services and applications that aim to create a social community of gamers and grow relationships among players. In accordance with the present invention, the Gamer Profile is the entirety of information (e.g., metadata) related to a specific user (i.e., the gamer's digital identity). The Gamer Profile is developed from a set of services that collect and expose this information in a meaningful way to the community. The Gamer Profile also provides for personalization such that users can customize and enhance their gaming experience. As will be discussed in greater detail below, the Gamer Profile consists of various components, including, but not limited to, a Gamercard, game achievements, and gamer preferences.

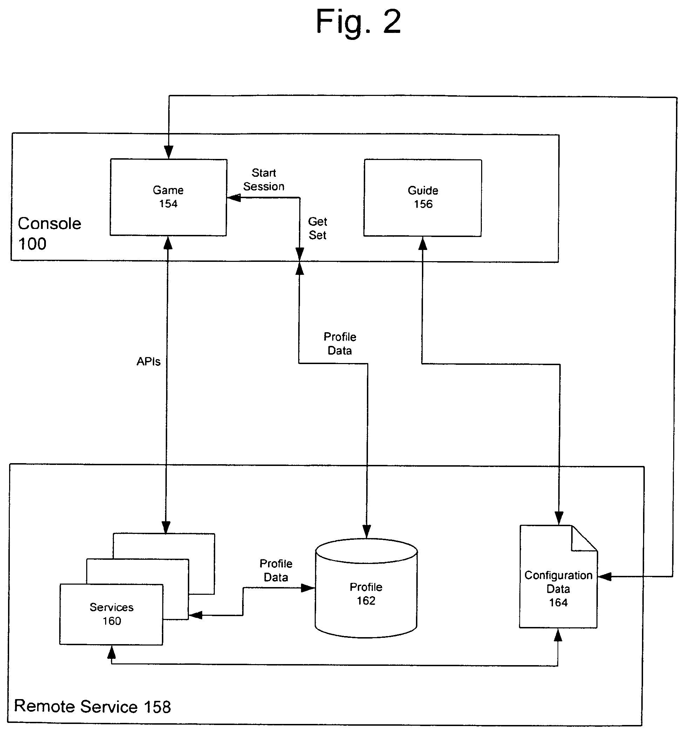

Referring to Fig. 2, there is illustrated an overview of an exemplary architecture that may be used to implement the Gamer Profile. The console 100 interacts with a remote service 158 that provides services 160 such as voice/chat, a friends list, matchmaking, content download, roaming, feedback, tournaments, voice messaging, and updates to gamers. The service 158 also maintains the Gamer Profiles in a profile database 162 and configuration data 164 used by the services 160 and games 154. The service 158 collects Gamer Profiles, aggregates, processes information supplied by other services 160, and fulfills real-time client requests for retrieving Gamer Profile-related services. The Gamer Profiles in the database 162 are also used by the games 154 to enable, among other things, personalization and customization, etc.

Using the console 100, the user may interact with a guide 156. The guide 156 provides an interface where the user may navigate to, and enter, various online areas and options provided by the service 158. The configuration data 164 stored by the service 158 may be used to determine features and options provided by the guide 156. When the game 154 is running, a defined set of APIs are used to call and interact with the services 160. When requesting Gamer Profile information via the APIs, the game 154 may pass a unique identifier of a user. The service 158 may return a Gamercard (discussed below), game stats, game achievements, affiliations, game settings etc. Additional details of the various aspects of the exemplary architecture are provided below.

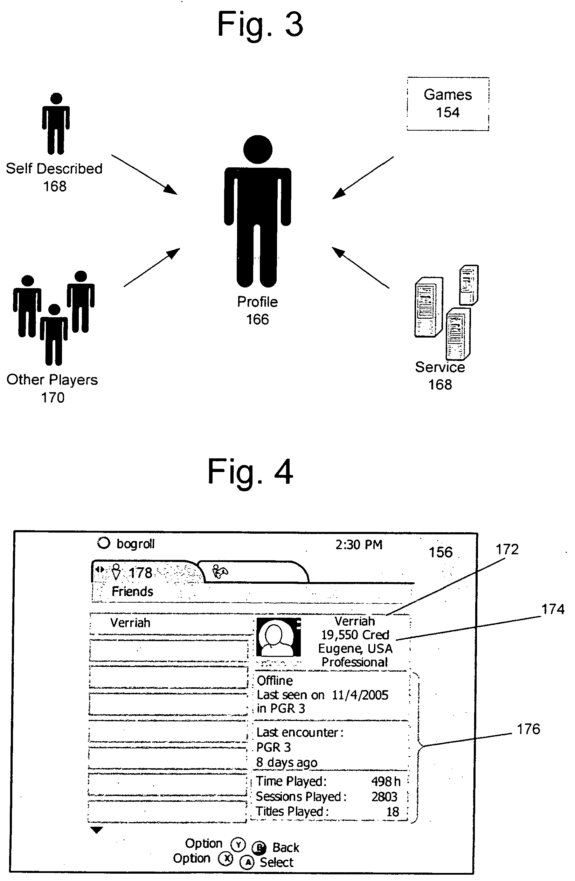

Referring to Fig. 3, the Gamer Profile 166 is created when a user creates a profile (selected from the guide 156) and chooses his/her unique Gamertag (a user's unique name), tile (picture/avatar associated with the user) other options during an account sign-up phase. From there, a base Gamer Profile 166 is created. The Gamer Profile 166 may then be populated from several sources. For example, the Gamer Profile 166 may include self-described data 168 from the Gamer Profile owner. Other gamers 170 can provide feedback regarding the Gamer Profile owner. The service 158 may track the gamer's online and offline activity. In addition, the games 154 may report the gamer's statistics and game achievements.

The owner of Gamer Profile can edit his/her Gamer Profile 166 directly and control who can view each section of the Gamer Profile. The Gamer Profile 166 may be edited via general fields (e.g., tile, country, language, gender, greeting, etc.) and/or system settings (e.g., voice output, controller vibration, character name, game format, game mode, etc.). Privacy/Opt-out Settings can be tuned for the Gamer Profile to, e.g., restrict presence information only to friends, allow game achievements to be visible to all, etc.

The Gamer Profile 166 may include feedback provided by other players 170. Feedback helps others learn about a particular gamer. For example, if the gamer uses foul language or aggressive play in game sessions, other gamers may submit feedback to the service 158. The feedback mechanism improves the user experience by building reputations. Players are therefore anonymous, but not unknown because of the accumulated feedback.

In another aspect of the invention, the service 158 and games 154 track online and offline activity of gamers to provide usage statistics in the Gamer Profile 166. When a gamer plays online, a particular game title is added to list of games played that is made visible to others. While offline, the game console 100 and game 154 track the gamer's activity via a mechanism for instrumenting games to collect detailed information about a specific player's in-game statistics and accomplishments. The Gamer Profile 166 is updated during the next connection to the service 158 to reflect the offline play. Game achievements may be reported to the service 154 by games via the Gamer Profile data mechanism.

As noted above the Gamer Profile 166 may be used for customization and preference setting on a global level, as well as a per game level. Gamer preferences aid games 154 in choosing defaults for common settings such as game profile name, controller inversion and controller vibration, etc. For example, if a gamer likes using an inverted controller, this preference will be used for new titles as they are played. Games 154 have access to Gamer Profiles via the database 162 and services 160. In addition, game usage data can be mined to tune the game 154 to the user's particular preferences and game features updated after the initial game launch.

A presence service may be included to provide information about users' whereabouts and activities. Presence information will be available to those users the gamer wishes to share it. The Gamer Profile will be the primary way to access the presence information.

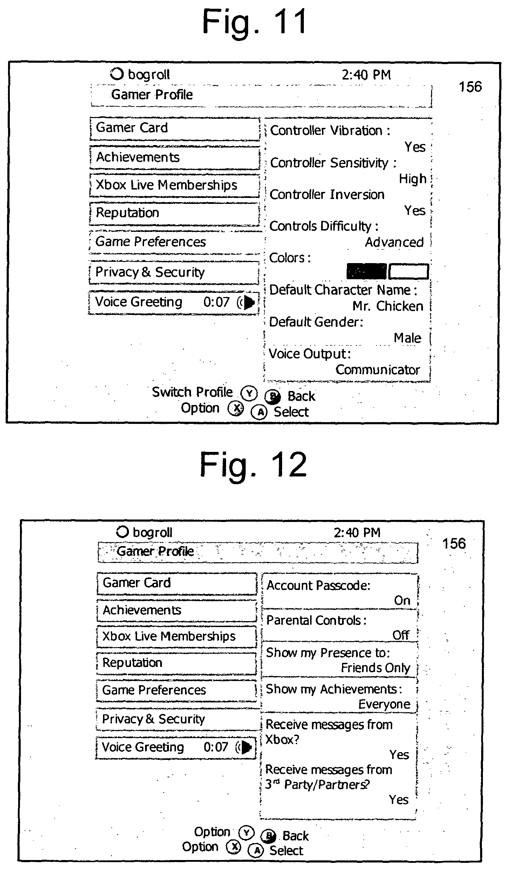

Referring to Figs. 4-13, the Gamer Profile can be viewed in a number of ways and forms, and is typically displayed in the Gamercard 172. The Gamercard 172 is the visual representation of the Gamer Profile 166 that is available to games on the console 100 and, e.g., the web. The Gamercard 172 serves as a summary or snapshot of a player's Gamer Profile 166. Gamers may use the Gamercard to set up a matchmaking list where gamers are added to a preferred players list to play again in the future.

As shown in Fig. 4, the Gamercard 172 may be divided into two regions, a base area 174 and a context-specific (or extended) area 176. The base area 174 is provides a set of Gamer Profile information in a standard and consistent way across multiple contexts, whereas the extended area 176 may be customized to fit a specific context. Although the Gamercard 172 of Figs. 4-13 are shown in the context of the guide 156, the Gamercard 172 may be visually separated from the rest of the screen and adopt the background color of the screen it is displayed on. In addition, the Gamercard 172 may be temporarily replaced by an animation while it is being loaded for viewing.

The base area 174 may be provided in different variants corresponding to differing contexts, while being a consistent view within each context. For example, an online Gamercard 172 is shown when one player is looking at another player's Gamercard 172 during an online session. The online base area 174 includes details such as the player's Gamertag, gamer tile, overall community rating, gamer Cred (a points-based reward points system), gamer zone, country, membership tier, awards, etc. An offline Gamercard 172 is shown when a player is looking at his/her own Gamercard 172. The offline base area 174 may include a subset of the online base area and may further include information regarding titles played and time played. The base area 174 of a Gamercard 172 is preferably fixed in size, has a consistent, static layout and has a fixed placement of all information elements, such as Tile or Gamer Cred.

The extended area 176 may include a set of Gamercard Actions, such as "View Profile" and "Send Feedback," etc. The extended area of the Gamercards is preferably not fixed in size, because it may vary based on the context. As shown in Figs. 4-12 a user may scroll through the list of other users via the guide 156 and a friends list 178. The Gamercard for other users may be displayed as the user scrolls among his/her friends or the user may be presented with an option to see a full view of the Gamer Profile. The full view mode consists of different views of the extended area 176 and may include several sections, such as a Profile Summary, Community Feedback, Game Achievements, Activity, and Social Network. The guide 156 may advance through the list of friends, recent players (and summary sections for each player), a user home page for navigating to various options and settings, etc.

The profile summary includes information regarding number of games played, time played, tile, greeting, etc. The community feedback includes ratings on style, sportsmanship, language, cooperation, etc. The game achievements section includes recent titles, experience points (gamer Cred), time played, game-specific stats and achievements, etc. The activity section includes Gamer Cred earned, sessions played, total time played, active days on the service, etc. The social network includes friends, groups, positive/negative feedback count, etc.

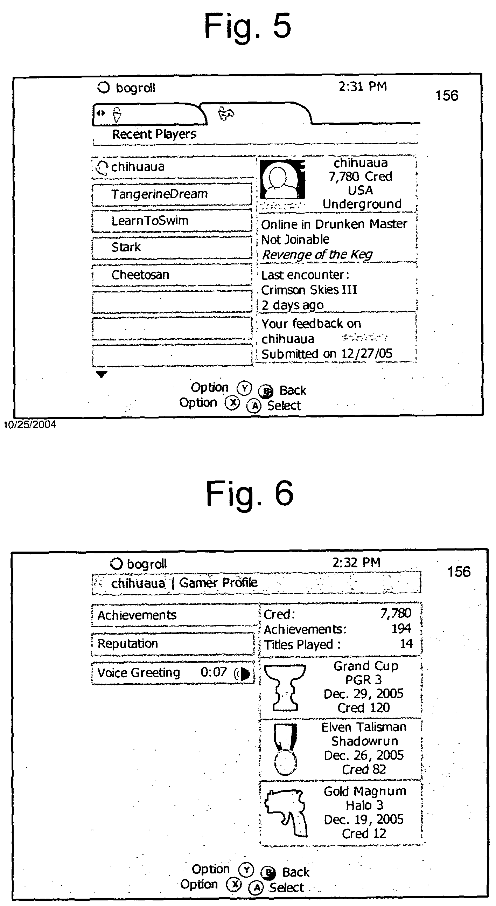

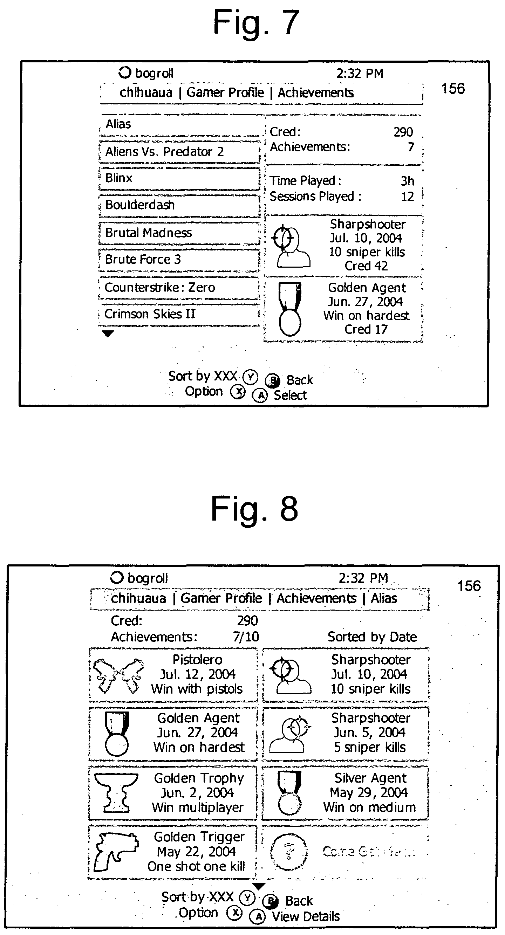

In accordance with the above, Fig. 5 illustrates a list of Recent Players in the guide 156. The Gamercard displayed in when browsing recent players may shown the base area and an extended area that provides information regarding recent games, feedback, and presence of the recent players. Figs. 6-8 illustrate further details that may be obtained about recent players, such as general achievements and gamer Cred (Fig. 6); game specific achievements, gamer Cred, times/sessions played (Fig. 7); and a date-sorted achievement display (Fig. 8).

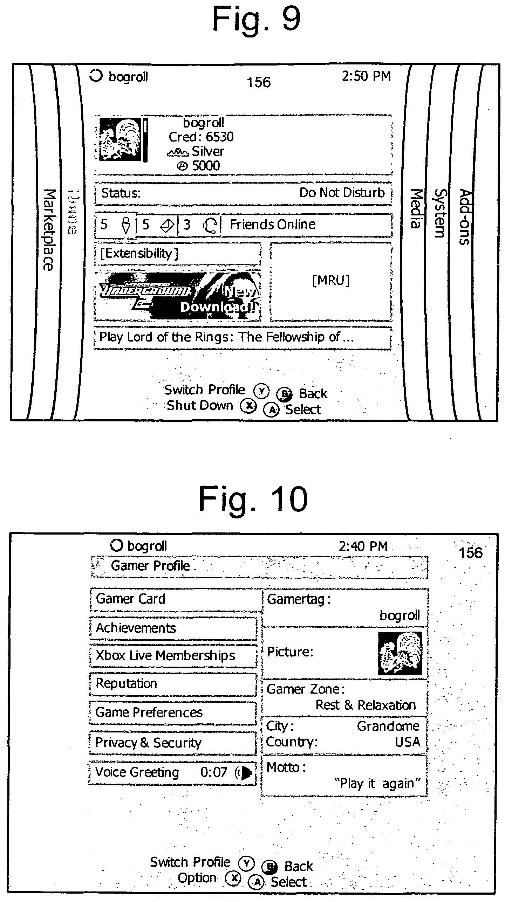

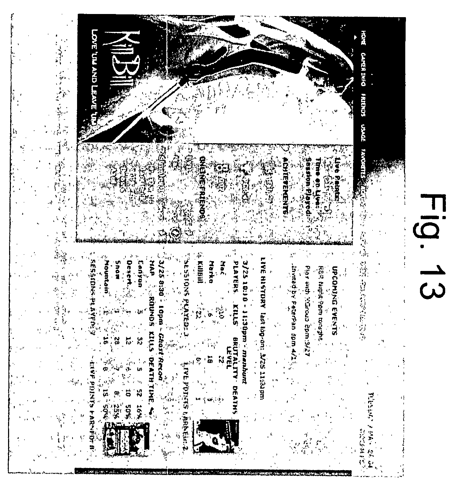

Fig. 9 illustrates an exemplary user home page from which the user may navigate among the various options provided by the service 158, edit Gamercard information, change game settings, set preferences and privacy settings, etc. Such settings and preferences may be accessed using the exemplary user interfaces of Figs. 10-12. Fig. 13 illustrates another exemplary home page in accordance with the present invention.

In accordance with the present invention, there may be differences, however, between how the guide 156, games 154 and players trigger Gamer Profile viewing. One instance is a user-instantiated Gamercard. Here, if a user receives a request from another gamer, the user may pause the game 154 and brings up the Gamercard 172 to find out who is sending the request. There may also be a game-instantiated Gamercard 172, where a user can select to view the Gamercard 171, which brings up a Gamercard system application.

It is noted that the user interface of Figs. 4-13 are provided for exemplary purposes only and are not intended to limit the invention as recited in the claims. Those of ordinary skill in the art will understand that there are various modifications that will fall within the scope of the appended claims.

While the present invention has been described in connection with the preferred embodiments of the various Figs., it is to be understood that other similar embodiments may be used or modifications and additions may be made to the described embodiment for performing the same function of the present invention without deviating therefrom.

## Claims

1. A gaming console (100), comprising:
a processor (101) adapted to run gaming applications on said gaming console;
a memory (112) adapted to store game-related and user-related data in a digital identity associated with a user; and
a network interface;
wherein said gaming console is adapted to aggregate data related to said user's interaction with said gaming applications and to forward said data to a remote service via said network interface.

2. The gaming console of claim 1, wherein said memory is further adapted to store information regarding at least one of said user's interaction with said gaming applications, preferences, game achievements and reward points in said digital identity.

3. The gaming console of claim 2, wherein said memory is further adapted to store feedback information about said user provided by other users of said remote service in said digital identity.

4. The gaming console of claim 2, wherein said gaming console is further adapted to provide a user interface which presents information contained in said digital identity.

5. The gaming console of claim 2, wherein said memory is further adapted to store information regarding accomplishments for said user within said gaming applications as game achievements, said game achievements being accumulated while said gaming console is connected to said remote service and disconnected from said remote service.

6. The gaming console of claim 5, wherein when said game achievements are accumulated when said gaming console is disconnected from said remote service, said game achievements are synchronized to said remote service when said gaming console is reconnected to said remote service.

7. A method of aggregating a user's digital identity by a gaming service (168), comprising:
receiving said user's game achievements from a gaming console (100) connected to said gaming service;
receiving feedback information regarding said user from other users (170) connected to said gaming service;
storing said user's game achievements and feedback information in said digital identity; and
making said digital identity available to other users via an interface in accordance with user preferences.

8. The method of claim 7, further comprising:
receiving game preferences from said user; and
storing said game preference in said digital identity.

9. The method of claim 8, further comprising applying said game preferences to gaming applications run on said gaming console.

10. The method of claim 7, said user's game achievements including statistics and accomplishments within gaming applications run on said gaming console, said method further comprising:
accumulating said user game achievements while said gaming console is connected to said gaming service and disconnected from said gaming service.

11. The method of claim 10, wherein when said user game achievements are accumulated when said gaming console is disconnected from said remote service, said method further comprising synchronizing said user game achievements with said gaming service after said gaming console is reconnected to said gaming service.

12. The method of claim 7, further comprising:
awarding reward points in accordance with said user game achievements; and
adding said reward points to said digital identity.

13. The method of claim 7, further comprising making said user's presence information available to said other users.

14. The method of claim 7, further comprising receiving self-provided information from said user.

15. The method of claim 14, further comprising:
receiving game customization preferences from said user,
storing said game customization preferences in said digital identity; and
applying said game customization preferences to gaming applications and controller devices on said gaming consoles connected to said remote service.

16. The method of claim 14, further comprising:
providing an offline mode in said gaming consoles, where said game achievements are accumulated when said user is not connected to said remote service; and
synchronizing said game achievements upon a next connection to said remote service.

17. The method of claim 14, further comprising developing a reputation associated with said user, said reputation being based upon said feedback information and said game achievements.

18. The method of claim 14, further comprising making said user's presence information available to said other users.

19. The method of claim 14, further comprising providing data to a guide that is executed on said gaming consoles, said guide providing a graphical interface to navigate said digital identity.

20. The method of claim 14, further comprising providing a user interface that conveys said digital identity to other users of said remote service.

## Patentansprüche

1. Spielkonsole (100), welche umfasst:
einen Prozessor (101), der ausgelegt ist zum Ausführen von Spielanwendungen auf der Spielkonsole;
einen Speicher (112), der ausgelegt ist zum Speichern spielbezogener und benutzerbezogener Daten in einer digitalen Identität, die mit einem Benutzer assoziiert ist; und
eine Netzschnittstelle;
wobei die Spielkonsole ausgelegt ist zum Aggregieren von Daten in Bezug auf eine Interaktion des Benutzers mit den Spielanwendungen und zum Weiterleiten der Daten an einen entfernten Dienst über die Netzschnittstelle.

2. Spielkonsole nach Anspruch 1, wobei der Speicher ferner ausgelegt ist zum Speichern von Informationen hinsichtlich wenigstens eines von Interaktion des Benutzers mit den Spielanwendungen, Präferenzen, Spielerfolgen und Belohnungspunkten in der digitalen Identität.

3. Spielkonsole nach Anspruch 2, wobei der Speicher ferner ausgelegt ist zum Speichern von Feedbackinformationen über den Benutzer bereitgestellt durch andere Benutzer des entfernten Dienstes in der digitalen Identität.

4. Spielkonsole nach Anspruch 2, wobei die Spielkonsole ferner ausgelegt ist zum Bereitstellen einer Benutzerschnittstelle, welche Informationen präsentiert, die in der digitalen Identität enthalten sind.

5. Spielkonsole nach Anspruch 2, wobei der Speicher ferner ausgelegt ist zum Speichern von Informationen hinsichtlich Leistungen für den Benutzer in den Spielanwendungen als Spielerfolge, wobei die Spielerfolge akkumuliert werden, während die Spielkonsole mit dem entfernten Dienst verbunden ist und von dem entfernten Dienst getrennt ist.

6. Spielkonsole nach Anspruch 5, wobei, wenn die Spielerfolge akkumuliert werden, wenn die Spielkonsole vom entfernten Dienst getrennt ist, die Spielerfolge mit dem entfernten Dienst synchronisiert werden, wenn die Spielkonsole wieder mit dem entfernten Dienst verbunden wird.

7. Verfahren zum Aggregieren der digitalen Identität eines Benutzers durch einen Spieldienst (168), welches umfasst:
Empfangen der Spielerfolge des Benutzers von einer Spielkonsole (100), die mit dem Spieldienst verbunden ist;
Empfangen von Feedbackinformationen hinsichtlich des Benutzers von anderen Benutzern (170), die mit dem Spieldienst verbunden sind;
Speichern der Spielerfolge des Benutzers und Feedbackinformationen in der digitalen Identität; und
Zurverfügungstellen der digitalen Identität an andere Benutzer über eine Schnittstelle in Übereinstimmung mit Benutzerpräferenzen.

8. Verfahren nach Anspruch 7, welches ferner umfasst:
Empfangen von Spielpräferenzen von dem Benutzer; und
Speichern der Spielpräferenz in der digitalen Identität.

9. Verfahren nach Anspruch 8, welches ferner ein Anwenden der Spielpräferenzen auf Spielanwendungen, die auf der Spielkonsole ausgeführt werden, umfasst.

10. Verfahren nach Anspruch 7, wobei die Spielerfolge des Benutzers Statistiken und Leistungen innerhalb von Spielanwendungen, die auf der Spielkonsole ausgeführt werden, umfassen, wobei das Verfahren ferner umfasst:
Akkumulieren der Spielerfolge des Benutzers, während die Spielkonsole mit dem Spieldienst verbunden ist und von dem Spieldienst getrennt ist.

11. Verfahren nach Anspruch 10, wobei, wenn die Spielerfolge des Benutzers akkumuliert werden, wenn die Spielkonsole vom entfernten Dienst getrennt ist, das Verfahren ferner ein Synchronisieren der Spielerfolge des Benutzers mit dem Spieldienst umfasst, nachdem die Spielkonsole wieder mit dem Spieldienst verbunden wurde.

12. Verfahren nach Anspruch 7, welches ferner umfasst:
Vergeben von Belohnungspunkten in Übereinstimmung mit den Spielerfolgen des Benutzers; und
Hinzufügen der Belohnungspunkte zur digitalen Identität.

13. Verfahren nach Anspruch 7, welches ferner ein Zurverfügungstellen der Präsenzinformationen des Benutzers an die anderen Benutzer umfasst.

14. Verfahren nach Anspruch 7, welches ferner ein Empfangen durch den Benutzer selbst bereitgestellter Informationen umfasst.

15. Verfahren nach Anspruch 14, welches ferner umfasst:
Empfangen von Spielpersonalisierungspräferenzen von dem Benutzer;
Speichern der Spielpersonalisierungspräferenzen in der digitalen Identität; und
Anwenden der Spielpersonalisierungspräferenzen auf Spielanwendungen und Controllergeräte auf den Spielkonsolen, die mit dem entfernten Dienst verbunden sind.

16. Verfahren nach Anspruch 14, welches ferner umfasst:
Bereitstellen eines Offline-Modus in den Spielkonsolen, wobei die Spielerfolge akkumuliert werden, wenn der Benutzer nicht mit dem entfernten Dienst verbunden ist; und
Synchronisieren der Spielerfolge bei einem nächsten Verbinden mit dem entfernten Dienst.

17. Verfahren nach Anspruch 14, welches ferner ein Entwickeln einer Reputation, die mit dem Benutzer assoziiert ist, umfasst, wobei die Reputation auf den Feedbackinformationen und den Spielerfolgen basiert.

18. Verfahren nach Anspruch 14, welches ferner ein Zurverfügungstellen der Präsenzinformationen des Benutzers an die anderen Benutzer umfasst.

19. Verfahren nach Anspruch 14, welches ferner ein Bereitstellen von Daten an einen Guide umfasst, der auf den Spielkonsolen ausgeführt wird, wobei der Guide eine graphische Schnittstelle zum Navigieren der digitalen Identität bereitstellt.

20. Verfahren nach Anspruch 14, welches ferner ein Bereitstellen einer Benutzerschnittstelle umfasst, welche die digitale Identität an andere Benutzer des entfernten Dienstes überträgt.

## Revendications

1. Console de jeu (100), comprenant:
un processeur (101) conçu pour exécuter des applications de jeu sur ladite console de jeu;
une mémoire (112) conçue pour stocker des données concernant le jeu et concernant l'utilisateur dans une identité numérique associée à un utilisateur; et
une interface réseau;
dans laquelle ladite console de jeu est conçue pour agréger des données liées à une interaction de l'utilisateur avec lesdites applications de jeu et pour faire suivre lesdites données à un service distant via ladite interface réseau.

2. Console de jeu selon la revendication 1, dans laquelle ladite mémoire est en outre conçue pour stocker des informations concernant au moins une de ladite interaction d'utilisateur avec lesdites applications de jeu, des préférences, des trophées de jeu et des points de récompense dans ladite identité numérique.

3. Console de jeu selon la revendication 2, dans laquelle ladite mémoire est en outre conçue pour stocker dans ladite identité numérique des informations de rétroaction concernant ledit utilisateur fournies par d'autres utilisateurs dudit service distant.

4. Console de jeu selon la revendication 2, dans laquelle ladite console de jeu est en outre conçue pour fournir une interface utilisateur qui présente des informations contenues dans ladite identité numérique.

5. Console de jeu selon la revendication 2, dans laquelle ladite mémoire est en outre conçue pour stocker des informations concernant des accomplissements pour ledit utilisateur à l'intérieur desdites applications de jeu comme des trophées de jeu, lesdits trophées de jeu étant accumulés tandis que ladite console de jeu est connectée audit service distant et déconnectée dudit service distant.

6. Console de jeu selon la revendication 5, dans laquelle lorsque lesdits trophées de jeu sont accumulés lorsque ladite console de jeu est déconnectée dudit service distant, lesdits trophées de jeu sont synchronisés audit service distant lorsque ladite console de jeu est reconnectée audit service distant.

7. Procédé d'agrégation de l'identité numérique d'un utilisateur par un service de jeu (168), comprenant:
la réception desdits trophées de jeu d'utilisateur à partir d'une console de jeu (100) connectée audit service de jeu;
la réception d'informations de rétroaction concernant ledit utilisateur en provenance d'autres utilisateurs (170) connectés audit service de jeu;
le stockage desdits trophées de jeu d'utilisateur et d'informations de rétroaction dans ladite identité numérique; et
le fait de rendre ladite identité numérique disponible à d'autres utilisateurs via une interface selon des préférences d'utilisateur.

8. Procédé selon la revendication 7, comprenant en outre:
la réception de préférences de jeu en provenance dudit utilisateur; et
le stockage desdites préférences de jeu dans ladite identité numérique.

9. Procédé selon la revendication 8, comprenant en outre l'application desdites préférences de jeu à des applications de jeu exécutées sur ladite console de jeu.

10. Procédé selon la revendication 7, lesdits trophées de jeu d'utilisateur incluant des statistiques et des accomplissements à l'intérieur d'applications de jeu exécutées sur ladite console de jeu, ledit procédé comprenant en outre:
l'accumulation desdits trophées de jeu d'utilisateur tandis que ladite console de jeu est connectée audit service de jeu et déconnectée dudit service de jeu.

11. Procédé selon la revendication 10, dans lequel lorsque lesdits trophées de jeu d'utilisateur sont accumulés quand ladite console de jeu est déconnectée dudit service distant,
ledit procédé comprenant en outre la synchronisation desdits trophées de jeu d'utilisateur avec ledit service de jeu après que ladite console de jeu est reconnectée audit service de jeu.

12. Procédé selon la revendication 7, comprenant en outre:
l'octroi de points de récompense selon lesdits trophées de jeu d'utilisateur; et
l'ajout desdits points de récompense à ladite identité numérique.

13. Procédé selon la revendication 7, comprenant en outre le fait de rendre lesdites informations de présence d'utilisateur disponibles auxdits autres utilisateurs.

14. Procédé selon la revendication 7, comprenant en outre la réception d'informations fournies par ledit utilisateur lui-même.

15. Procédé selon la revendication 14, comprenant en outre:
la réception de préférences de personnalisation de jeu provenant dudit utilisateur;
le stockage desdites préférences de personnalisation de jeu dans ladite identité numérique; et
l'application desdites préférences de personnalisation de jeu à des applications de jeu et à des dispositifs formant unités de commande sur lesdites consoles de jeu connectées audit service distant.

16. Procédé selon la revendication 14, comprenant en outre:
la présence d'un mode autonome dans lesdites consoles de jeu, où lesdits trophées de jeu sont accumulés lorsque ledit utilisateur n'est pas connecté audit service distant; et
la synchronisation desdits trophées de jeu lors d'une connexion suivante audit service distant.

17. Procédé selon la revendication 14, comprenant en outre le développement d'une réputation associée audit utilisateur, ladite réputation étant basée sur lesdites informations de rétroaction et lesdits trophées de jeu.

18. Procédé selon la revendication 14, comprenant en outre le fait de rendre lesdites informations de présence d'utilisateur disponibles auxdits autres utilisateurs.

19. Procédé selon la revendication 14, comprenant en outre la fourniture de données à un guide qui est exécuté sur lesdites consoles de jeu, ledit guide fournissant une interface graphique pour naviguer dans ladite identité numérique.

20. Procédé selon la revendication 14, comprenant en outre la fourniture d'une interface utilisateur qui transporte ladite identité numérique vers d'autres utilisateurs dudit service distant.
